(19) Europäisches Patentamt
European Patent Office
Office européen des brevets

(11) **EP 4 501 608 A1**

(12) **EUROPEAN PATENT APPLICATION**
published in accordance with Art. 153(4) EPC

(43) Date of publication:
05.02.2025 Bulletin 2025/06

(21) Application number: 23775003.9

(22) Date of filing: 23.03.2023

(51) International Patent Classification (IPC):
*B29C 70/50* (2006.01)    *B29B 11/16* (2006.01)
*B29C 70/20* (2006.01)

(52) Cooperative Patent Classification (CPC):
B29B 11/16; B29C 70/20; B29C 70/50

(86) International application number:
PCT/JP2023/011424

(87) International publication number:
WO 2023/182409 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.03.2022 JP 2022048572

(71) Applicant: Mitsui Chemicals, Inc.
Tokyo 104-0028 (JP)

(72) Inventors:
• TANAKA, Toshihiro
  Chiba 299-0265 (JP)
• MIYATA, Atsushi
  Tokyo 104-0028 (JP)
• NAKAYAMA, Kentaro
  Chiba 299-0265 (JP)

(74) Representative: Hoffmann Eitle
Patent- und Rechtsanwälte PartmbB
Arabellastraße 30
81925 München (DE)

(54) **FIBER-REINFORCED RESIN SHEET AND METHOD FOR MANUFACTURING SAME**

(57) The present invention provides: a fiber-reinforced resin sheet that exhibits a higher tensile strength; and a method for manufacturing said fiber-reinforced resin sheet. The fiber-reinforced resin sheet comprises: multiple reinforcing fibers that are arranged so as to be oriented in one direction; and a thermoplastic resin with which the reinforcing fibers are impregnated. A coefficient of variation of the standard deviation of orientation angles of the multiple reinforcing fibers is 17.0% or less.

Figure

EP 4 501 608 A1

## Description

Technical Field

The present invention relates to a fiber reinforced resin sheet and a method for producing the fiber reinforced resin sheet.

Background Art

A fiber reinforced resin sheet (hereinafter also simply referred to as "unidirectional (UD) sheet") having a shape of a thin film are known. Such a fiber reinforced resin sheet contains a plurality of reinforcing fibers arranged to be oriented in one direction and a resin composition (matrix resin), with the reinforcing fibers impregnated with the resin composition. The UD sheet is lighter than metal and has high mechanical strength such as tensile strength, thus it is expected to be used for various applications. A UD sheet can be prepared by a method such as impregnating a plurality of reinforcing fibers arranged to be oriented in one direction with a resin.

Patent Literature (hereinafter, referred to as PTL) 1 discloses that dispersing reinforcing fibers more uniformly can further increase the tensile strength of a UD sheet. In PTL 1, the change in the amount of reinforcing resins (that is, the coefficient of variation (or variation coefficient) of the fiber volume fraction (Vf)) between regions in the parallel cross section of a UD sheet can be reduced by adjusting the tension applied to the oriented reinforcing fibers when impregnating the reinforcing fibers with resin, or by setting the width of the reinforcing fiber bundle during impregnation within a specified range. PTL 1 teaches that the tensile strength of the UD sheet was improved by the above configuration.

Citation List

Patent Literature

PTL 1
WO2019/017057

Summary of Invention

Technical Problem

PTL 1 teaches that the UD sheet thereof has improved tensile strength. However, as the present inventors studied, even a UD sheet that is prepared by the method described in PTL 1 and satisfies the requirements described in PTL 1 is not recognized to have sufficiently increased tensile strength.

The present invention was made in view of the problems described above and an object of the present invention is to provide a fiber reinforced resin sheet with increased tensile strength and a method for producing the fiber reinforced resin sheet.

Solution to Problem

One aspect of the present invention for solving the above problems relates to the fiber reinforced resin sheets of the following items [1] to [6].

[1] A fiber reinforced resin sheet, including:

a plurality of reinforcing fibers arranged to be oriented in one direction; and
a thermoplastic resin spreading through the plurality of reinforcing fibers, in which
a coefficient of variation of standard deviations of orientation angles of the plurality of reinforcing fibers is 17.0% or less.

[2] The fiber reinforced resin sheet according to [1], in which
the plurality of reinforcing fibers have an average value of the standard deviations of the orientation angles of 5.0° or less.

[3] The fiber reinforced resin sheet according to [1] or [2], in which
the fiber reinforced resin sheet has a coefficient of variation of fiber volume fractions (Vf) of 5.0% or less.

[4] The fiber reinforced resin sheet according to any one of [1] to [3], in which

the fiber reinforced resin sheet has an average value of fiber volume fractions (Vf) of 30% or more and 70% or less.

[5] The fiber reinforced resin sheet according to any one of [1] to [4], in which
the fiber reinforced resin sheet has a thickness of 0.05 mm or more and 3.00 mm or less.

[6] The fiber reinforced resin sheet according to any one of [1] to [5], in which
the thermoplastic resin is a polyolefin.

Another aspect of the present invention for solving the above problems relates to the methods of the following items [7] and [8] for producing fiber reinforced resin sheets.

[7] A method for producing a fiber reinforced resin sheet, the method including:

arranging a plurality of reinforcing fibers to orient the plurality of reinforcing fibers in one direction;
impregnating the plurality of arranged reinforcing fibers with a thermoplastic resin; and
by using a cooling roller, cooling the thermoplastic resin spreading through the plurality of reinforcing fibers while pressure is applied,
in which
at least two of conditions (1) to (3) below are satisfied

(1) the impregnating is performed while a tension of 800 cN or more and 2,000 cN or less is applied to the plurality of reinforcing fibers in the one direction,
(2) the cooling while the pressure is applied is performed with press pressure of the pressure applied by using the cooling roller being 1.0 bar or more and 6.0 bar or less, and
(3) the cooling while the pressure is applied is performed by applying the pressure by using the cooling roller having been subjected to mold release treatment.

[8] The method according to [7], in which
all of the conditions (1) to (3) are satisfied.

Advantageous Effects of Invention

The present invention is capable of providing a fiber reinforced resin sheet with increased tensile strength and a method for producing the fiber reinforced resin sheet.

Brief Description of Drawing

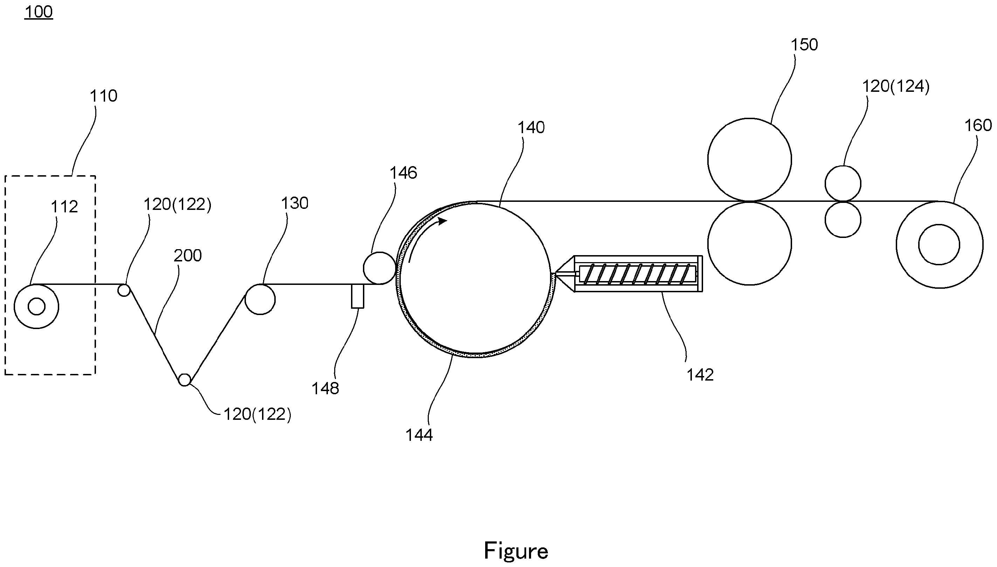

The figure schematically illustrates an apparatus (production apparatus) for producing a UD sheet.

Description of Embodiments

1. Fiber Reinforced Resin Sheet

An embodiment of the present invention relates to a fiber reinforced resin sheet (UD sheet) containing a plurality of reinforcing fibers arranged to be oriented in one direction and a resin composition (matrix resin), with the reinforcing fibers impregnated with the resin composition.

The reinforcing fibers have a feature such that variation in the orientation directions of the reinforcing fibers is reduced in each site within the UD sheet. Specifically, within the UD sheet, a coefficient of variation of the standard deviations of the orientation angles of reinforcing fibers is 17.0% or less.

The orientation angle can be determined by image analysis of a cross-sectional photograph of the UD sheet taken in the plane direction (direction parallel to the orientation direction of reinforcing fibers) by X-ray computed tomography (X-ray CT) or the like. In the cross-sectional photograph, a reinforcing fiber and the matrix resin are represented by different luminous intensities; typically, the reinforcing fiber is represented by a higher luminous intensity, i.e., whiter, and the matrix resin is represented by a lower luminous intensity, i.e., more gray. Therefore, in the cross-sectional photograph, it is possible to identify the position of a reinforcing fiber in the matrix resin (which is a background) and the level of the orientation of the reinforcing fiber by extracting a section having a high gradient of the gray value (for example, a section having the gradient of 3000 or more). The projection angle in the section where the gradient of the gray value is high can be used as the orientation angle of the reinforcing fiber (corresponding to the section) in the cross-sectional photograph. The orientation angles of the reinforcing fibers in the cross-sectional photograph are determined respectively, and the standard deviation of the orientation angles in the cross-sectional photograph is determined. A plurality of cross-sectional photographs are obtained from different sites of the UD sheet, the standard deviation of the orientation angles is determined from each obtained cross-sectional photograph, and the coefficient of variation of the standard deviations in the cross-sectional photographs is calculated. The coefficient of variation of the standard deviations is used as the coefficient of variation (%) of the standard deviations of the orientation angles in the UD sheet. The number of cross-sectional photographs used for determining the coefficient of variation is not limited, but cross-sectional photographs of four or more sites that are sufficiently separated from each other (for example, approximately 15 cm apart) may be used. In addition, the following is possible: a virtual line (center line) connecting the centers of the UD sheet in the direction (width direction) orthogonal to the direction in which reinforcing fibers are oriented in the UD sheet is specified; the center line is divided into five equal parts; and cross-sectional photographs at four points other than the ends obtained by the dividing are used.

In the present embodiment, the coefficient of variation of the standard deviations of the orientation angles is 17.0% or less.

Inside a UD sheet, the reinforcing fibers are basically arranged to be oriented in one direction. However, a slight deviation in the orientation angle may occur locally during manufacturing, or a reinforcing fiber may be partially cut and the cut piece may be misaligned. As a result, even within a UD sheet, the orientation angle of the reinforcing fibers may vary in each site. In the present embodiment, the variation in the deviation in the orientation angle in each site in the UD sheet are reduced by reducing the coefficient of variation. In other words, the deviation in the orientation angle is adjusted to occur at substantially the same level in different sites. As a result, it is possible to reduce variations in the characteristics of different sites in a UD sheet, thereby allowing the UD sheet to more fully express the original characteristics thereof.

It may be possible to reduce the variations in characteristics in a similar manner even when the coefficient of variation for the fiber volume fraction (Vf) at each site is lowered as described in PTL 1. However, even when the coefficient of variation of the fiber volume fraction (Vf) is low, the orientation angle of the reinforcing fibers may deviate partially. In such a case, it is considered that variations in characteristics occur in each site, and the original characteristics of the UD sheet cannot be fully exhibited. In contrast, reducing the variation in the orientation angles of reinforcing fibers, which is a feature of UD sheets, allows the original characteristics of the UD sheet to be fully exhibited.

From the above viewpoint, the coefficient of variation of the standard deviation of orientation angles is preferably 10.0% or less, more preferably 5.0% or less. The lower limit of the coefficient of variation of the standard deviations of the orientation angles is ideally 0%, but realistically it can be set to 1.0% or more.

In addition, regarding the reinforcing fibers, the average value of the standard deviations of orientation angles in the sites determined by the above method is preferably 5.0° or less. In other words, a UD sheet includes reinforcing fibers arranged to be oriented in one direction; therefore, from the viewpoint of more fully exhibiting the original characteristics of the UD sheet, it is preferable that the reinforcing fibers are more precisely aligned and oriented in one direction in each site. From the above viewpoint, the average value of the standard deviations of orientation angles is preferably 10.0° or less, more preferably 5.0° or less. The lower limit of the average value of the standard deviations of orientation angles is ideally 0°, but realistically it can be set to 1.0° or more.

From the findings of the present inventors, the effect of exhibiting the original characteristics of a UD sheet increases when the coefficient of variation of the standard deviations of the orientation angles is reduced (in other words, further reducing the variation in the deviation of the orientation direction of reinforcing fibers) as compared to when the average value of the standard deviations of orientation angles is reduced (in other words, further aligning the reinforcing fibers in one direction).

In addition, the UD sheet relating to the present embodiment preferably has a coefficient of variation of the fiber volume fractions (Vf) of 5.0% or less.

The fiber volume fraction (Vf) can be determined by image analysis of a cross-sectional photograph of a UD sheet, in a similar manner as in the measurement of the standard deviation of the orientation angles. That is, based on the difference in gray value in the cross-sectional photograph, a reinforcing fiber portion and a matrix resin portion are separated into regions, and the area of each region is determined. Using these areas as the volume of the reinforcing fiber portion and the volume of the matrix resin portion, the fiber volume fraction (Vf) in the cross-sectional photograph is determined from these values. A plurality of cross-sectional photographs are obtained from different sites of the UD sheet, the fiber volume fraction (Vf) is determined from each obtained cross-sectional photograph, and the coefficient of variation of the fiber volume fractions (Vf) in the cross-sectional photographs is calculated. The coefficient of variation of the standard deviations is used as the coefficient of variation (%) of the fiber volume fractions (Vf) in the UD sheet. The number of cross-sectional photographs used for determining the coefficient of variation is not limited, but cross-sectional photographs of four or more sites that are sufficiently separated from each other (for example, approximately 15 cm apart) may be used.

From the viewpoint of reducing variations in characteristics in each site within the UD sheet, the coefficient of variation of the fiber volume fractions (Vf) is preferably lower. From the above viewpoint, the coefficient of variation of the fiber volume fractions (Vf) is preferably 10.0% or less, more preferably 5.0% or less. The lower limit of the coefficient of variation of the fiber volume fractions (Vf) is ideally 0%, but realistically it can be set to 1.0% or more. From the findings of the present inventors, the effect of exhibiting the original characteristics of a UD sheet increases when the coefficient of variation of the standard deviations of the orientation angles is reduced (in other words, further reducing the variation in the deviation of the orientation direction of reinforcing fibers) as compared to when the coefficient of variation of the fiber volume fractions (Vf) is reduced (in other words, further reducing the variation in the fiber volume fraction (Vf)).

In addition, the UD sheet relating to the present embodiment preferably has an average value of the fiber volume fraction (Vf) determined by the above method in each site of 30% or more and 70% or less. When the average value of the fiber volume fraction (Vf) is 30% or more, the amount of reinforcing fibers in the UD sheet becomes satisfactorily high, thereby exhibiting the original characteristics of a UD sheet, such as increase in tensile strength. When the average value of the fiber volume fraction (Vf) is 70% or less, the amount of matrix resin in the UD sheet becomes satisfactorily high, thereby preventing the detachment of reinforcing fibers and increasing the adhesion of the UD sheet to other members. The average value of the fiber volume fraction (Vf) is more preferably 35% or more and 65% or less, and even more preferably 40% or more and 60% or less.

In addition, the UD sheet relating to the present embodiment preferably has an average value of porosity of 10.0% or less.

The porosity can be determined by image analysis of a cross-sectional photograph of a UD sheet, in a similar manner as in the measurement of the standard deviation of the orientation angles. In the cross-sectional photograph, a void is represented by a luminous intensity different from those of a reinforcing fiber and the matrix resin, and typically the void is represented by a lower luminous intensity, i.e., blacker. In the cross-sectional photograph, a site with a low luminous intensity corresponding to a void is separated as a void portion, and the area of the void portion is obtained. The ratio of the areas of the void portions in the cross-sectional photograph is used as the porosity in the cross-sectional photograph. A plurality of cross-sectional photographs are obtained from different sites of the UD sheet, and the porosity is determined from each obtained cross-sectional photographs. The average value of these porosity values is used as the average value of porosity in the UD sheet. The number of cross-sectional photographs used for determining the coefficient of variation is not limited, but cross-sectional photographs of four or more sites that are sufficiently separated from each other (for example, approximately 15 cm apart) may be used.

From the viewpoint of more fully exhibiting the original characteristics of the UD sheet, the average value of the porosity is preferably lower. From the above viewpoint, the upper limit of the average value of porosity is preferably 8.0% or less, more preferably 5.0% or less. The lower limit of the average value of porosity is ideally 0%, but realistically it can be set to 0.1% or more.

The UD sheet relating to the present embodiment has improved tensile strength, achieving a strength closer to the theoretical value of tensile strength calculated from the material of the UD sheet.

Specifically, the tensile strength of the UD sheet relating to the present embodiment is preferably 1,500 MPa or more, more preferably 1,550 MPa or more, and even more preferably 1,600 MPa or more. The upper limit of the tensile strength is not limited, but may be 3,000 MPa or less.

The theoretical value of tensile strength can be calculated from the equation below based on the compound rule by using the tensile strength (MPa) of a reinforcing fiber bundle (which is the raw material), the above fiber volume fraction (Vf) (%), the elastic modulus (MPa) of the matrix resin, and the breaking strain (%) of reinforcing fibers. The tensile strength and breaking strain of the reinforcing fibers can be obtained by any method in accordance with the material of the reinforcing fibers, for example, when the material is carbon fibers, the values can be obtained by measuring according to JIS R7606 (2000). The elastic modulus (MPa) of the matrix resin may be obtained by preparing a multipurpose test piece, a test piece shaped as a JIS K7139 (2009), by injection molding the matrix resin, and performing measurement by a tensile test in accordance with JIS K7161-2 (2014).

$$\text{Tensile strength (MPa) according to compound law} = \text{Tensile strength (MPa) of carbon fiber} \times \frac{\text{Average value of Vf (\%)}}{100}$$

$$+ \; \text{Elastic modulus (MPa) of matrix resin} \times \frac{\text{Breaking strain (\%) of carbon fiber}}{100} \times \frac{(100 - \text{Average value of Vf (\%)})}{100}$$

The UD sheet relating to the present embodiment has a ratio (development rate of tensile strength) of the measured value of tensile strength to the theoretical value of tensile strength of preferably 75% or more, more preferably 78% or more, and even more preferably 80% or more. The ratio can be calculated from the equation below. The upper limit of the above ratio is ideally 100%, but realistically it can be 95% or less. The measured value of the tensile strength of the UD sheet may be a value obtained by measurement according to ASTM D3039/D3039-07.

$$\text{Tensile strength development rate (\%)} = \frac{\text{Tensile strength (MPa) of fiber reinforced resin sheet}}{\text{Tensile strength (MPa) according to compound law}}$$

The thickness of the UD sheet relating to the present embodiment is preferably 0.05 mm or more and 3.00 mm or less. When the thickness is 0.05 mm or more, the tensile strength is more likely to increase. When the thickness is 3.00 mm or less, the tensile strength development rate is more likely to increase. From the above viewpoint, the thickness of the UD sheet is more preferably 0.10 mm or more and 1.00 mm or less, and even more preferably 0.10 mm or more and 0.50 mm or less.

The UD sheet relating to the present embodiment may have any size. The UD sheet may be in the form of a wide sheet, or may be cut into a tape shape by appropriately cutting the UD sheet.

1-1. Reinforcing fiber

The material for the reinforcing fibers is not limited. For example, any one of carbon fibers, glass fibers, aramid fibers, alumina fibers, silicon carbide fibers, boron fibers, metal fibers, and the like may be used as the reinforcing fibers. In particular, carbon fibers are preferred as carbon fibers have excellent mechanical properties and can further reduce the weight of a molded product. Examples of the carbon fibers include PAN-based carbon fibers, pitch-based carbon fibers, and rayon-based carbon fibers. In particular, PAN-based carbon long fibers are preferred as PAN-based carbon long fibers have an excellent balance between strength and elastic modulus.

The carbon fibers have a surface oxygen concentration ratio [O/C], which is the ratio between the numbers of atoms of oxygen (O) and carbon (C) on the surface of the carbon fibers measured by X-ray photoelectron spectroscopy, of preferably 0.05 or more and 0.5 or less, more preferably 0.08 or more and 0.4 or less, and even more preferably 0.1 or more and 0.3 or less. A surface oxygen concentration ratio of 0.05 or more allows for a sufficient amount of functional groups on the surface of the carbon fibers, thereby further increasing the adhesiveness with the matrix resin. A surface oxygen concentration ratio of 0.5 or less allows excellent handling and productivity of carbon fibers. The surface oxygen concentration ratio [O/C] can be measured by the method described in WO2017/183672. The surface oxygen concentration ratio [O/C] may be adjusted by a known method such as electrolytic oxidation treatment, chemical solution oxidation treatment, or gas phase oxidation treatment. In particular, the electrolytic oxidation treatment is preferred.

The reinforcing fibers have an average diameter of preferably 1 $\mu$m or more and 20 $\mu$m or less, more preferably 3 $\mu$m or more and 15 $\mu$m or less, and even more preferably 4 $\mu$m or more and 10 $\mu$m or less, from the viewpoint of satisfactorily increasing the strength improvement effect of the reinforcing fibers.

The length of the reinforcing fibers is usually 15 mm or more. The lower limit of the length of the reinforcing fibers is preferably 20 mm or more, more preferably 100 mm or more, and even more preferably 500 mm or more. The maximum value of the upper limit of the length of the reinforcing fibers is preferably the same as the maximum value of the length of a UD sheet, and is, for example, 50 m. Typically, a UD sheet used for a resin molded article is cut to have a desired length after the production of the UD sheet. Therefore, the length of the reinforcing fibers in the UD sheet of the resin molded body may become smaller than the lower limit of the length.

The reinforcing fiber are preferably obtained by opening (spreading) a fiber bundle in which a plurality of carbon fibers are bundled with a binder (sizing agent). The number of single threads of the carbon fiber bundle is not limited. The number is typically 100 or more and 350,000 or less, preferably 1,000 or more and 250,000 or less, and more preferably 5,000 or more and 220,000 or less.

The binder may be any one of known binders including olefin emulsions, urethane emulsions, epoxy emulsions, and nylon emulsions. The binder is preferably an olefin emulsion, and more preferably an ethylene emulsion or a propylene emulsion. Examples of ethylene polymers contained in the ethylene emulsion include ethylene homopolymers and copolymers of ethylene and $\alpha$-olefins having 3 or more and 10 or less carbon atoms. Examples of propylene polymers contained in the propylene emulsion include propylene homopolymers and copolymers of propylene and ethylene or $\alpha$-olefins having 4 or more and 10 or less carbon atoms.

In particular, from the viewpoint of further increasing the adhesiveness between the reinforcing fiber bundle and the matrix resin, the binder preferably contains an unmodified polyolefin and a modified polyolefin. The unmodified polyolefin is preferably propylene homopolymer, ethylene homopolymer, ethylene/propylene copolymer, propylene/1-butene copolymer, or ethylene/propylene/1-butene copolymer. The modified polyolefin may be any polyolefin, for example, a polyolefin in which a carboxylic acid group, a carboxylic acid anhydride group, or a carboxylic acid ester group is grafted into the polymer chain of an unmodified polyolefin, and a salt is formed between the above functional group and a metal cation. In particular, a modified polyolefin containing a carboxylic acid metal salt is more preferred.

1-2. Matrix resin

The matrix resin is a resin composition containing a thermoplastic resin. The matrix resin may also contain at least one additional component other than the resin components, such as a filler.

Examples of the thermoplastic resin include polycarbonate resin, styrene resin, polyamide resin, polyester resin, polyphenylene sulfide resin (PPS resin), modified polyphenylene ether resin (modified PPE resin), polyacetal resin (POM resin), liquid crystal polyester, polyarylate, acrylic resins such as polymethylmethacrylate resin (PMMA), vinyl chloride, polyimide (PI), polyamideimide (PAI), polyetherimide (PEI), polysulfone, polyethersulfone, polyketone, polyetherketone, polyetheretherketone (PEEK), polyolefins such as polyethylene, polypropylene, polybutene, and poly4-methyl-1-pentene, modified polyolefin derived therefrom, and phenoxy resin. The polyolefin may also be a copolymer, and examples thereof include ethylene/propylene copolymer, ethylene/1-butene copolymer, ethylene/propylene/diene copolymer, ethylene/carbon monoxide/diene copolymer, ethylene/ethyl(meth)acrylate copolymer, ethylene/glycidyl(meth)acrylate copolymer, and ethylene/vinyl acetate/glycidyl(meth)acrylate copolymer.

In particular, polyamide resins and polyester resins are preferred as resins with higher polarity, and polyolefin resins are preferred as resins with lower polarity. In addition, from the viewpoint of reducing costs and reducing the weight of a molded product, polypropylene resins and polyamide resins are preferred. In addition, from the viewpoint of increasing the affinity with the reinforcing fibers bundled with the binder, the matrix resin may contain the above-described modified polyolefin.

1-2-1-1. Polypropylene resin

The type of polypropylene resin is not limited, and may be a propylene homopolymer, a propylene copolymer, or a mixture thereof. The stereoregularity of the polypropylene resin is not limited either, and may be isotactic, syndiotactic, or atactic. The stereoregularity is preferably isotactic or syndiotactic.

The polypropylene resin may be an unmodified polypropylene resin (P1), a modified polypropylene resin (P2) that has a carboxylate or the like bonded to the polymer chain thereof, or a mixture of the resin (P1) and the resin (P2). The mixture is preferred. In the mixture, a mass ratio [(P1)/(P1+P2)] of the unmodified polypropylene resin (P1) to the total mass of the unmodified polypropylene resin (P1) and the modified polypropylene resin (P2) is preferably 80 mass% or more and 99 mass% or less, more preferably 85 mass% or more and 98 mass%, and even more preferably 90 mass% or more and 97 mass% or less.

The unmodified polypropylene resin (P1) has a melt flow rate (MFR)-measured at 230°C and a load of 2.16 kg according to ASTM D1238-of preferably 100 g/10 min or more, more preferably 130 g/10 min or more and 500 g/10 min or less. An MFR within this range is more likely to satisfactorily impregnate the reinforcing fibers with the matrix resin.

The unmodified polypropylene resin (P1) has a weight average molecular weight (Mw) of preferably 50,000 or more and 300,000 or less, more preferably 50,000 or more and 200,000 or less.

The modified polypropylene resin (P1) is a resin component that is mainly composed of a structural unit derived from propylene, and the content of the structural unit derived from propylene is 50 mol% or more. In addition to the structural unit derived from propylene, the unmodified polypropylene resin (P1) may contain a structural unit derived from an $\alpha$-olefin other than propylene, a conjugated diene or non-conjugated diene, or a polyene.

Examples of the $\alpha$-olefin-the copolymer component when the unmodified polypropylene resin (P1) is a copolymer-include $\alpha$-olefins (excluding propylene) having 2 to 20 carbon atoms, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. In particular, 1-butene, ethylene, 4-methyl-1-pentene, and 1-hexene are preferred, and 1-butene and 4-methyl-1-pentene are more preferred. Examples of the conjugated diene and non-conjugated diene, as the copolymer component, include butadiene, ethylidene norbornene, dicyclopentadiene, and 1,5-hexadiene. The above $\alpha$-olefins, conjugated dienes, and non-conjugated dienes may be used in combination.

The modified polypropylene resin (P2) is a polypropylene resin having a carboxylate or the like bonded to the polymer chain thereof. In particular, when the modified polypropylene resin (P2) has a carboxylate, the interfacial adhesive strength between the reinforcing fibers and the matrix resin is more likely to increase.

The weight average molecular weight (Mw) of the modified polypropylene resin (P2) is preferably 1,000 or more and 100,000 or less, more preferably 2,000 or more and 80,000 or less.

The modified polypropylene resin (P2) can be synthesized by a known method such as radical graft polymerization of an unmodified propylene polymer and a monomer having a carboxylic acid structure.

The unmodified propylene polymer may be any propylene polymer that is the same as the unmodified polypropylene resin (P1) described above, but preferably is a propylene homopolymer or a copolymer of propylene and an $\alpha$-olefin, such as ethylene/propylene copolymer, propylene/1-butene copolymer, or ethylene/propylene/1-butene copolymer.

The monomer having a carboxylic acid structure may be a monomer having a carboxylic acid group or a monomer having a carboxylic acid ester. The carboxylic acid group may be neutralized, and the carboxylic acid ester may be saponified. Specific examples of the monomer include ethylene-based unsaturated carboxylic acids, anhydrides thereof, and esters thereof, and compounds having unsaturated vinyl groups other than olefins.

Examples of the ethylene-based unsaturated carboxylic acids include (meth)acrylic acid, maleic acid, fumaric acid, tetrahydrophthalic acid, itaconic acid, citraconic acid, crotonic acid, and isocrotonic acid. Examples of the anhydrides include nadic acid (endosis-bicyclo[2.2.1] hept-5-ene-2,3-dicarboxylic acid), maleic anhydride, and citraconic anhydride.

Examples of the compounds having unsaturated vinyl groups other than olefins include (meth)acrylic acid esters, such as methyl (meth)acrylate, ethyl (meth)acrylate, propyl (meth)acrylate, n-butyl (meth)acrylate, i-butyl (meth)acrylate, tert-butyl (meth)acrylate, n-amyl (meth)acrylate, isoamyl (meth)acrylate, n-hexyl (meth)acrylate, 2-ethylhexyl (meth) acrylate, octyl (meth)acrylate, decyl (meth)acrylate, dodecyl (meth)acrylate, octadecyl (meth)acrylate, stearyl (meth) acrylate, tridecyl (meth)acrylate, lauroyl (meth)acrylate, cyclohexyl (meth)acrylate, benzyl (meth)acrylate, phenyl (meth) acrylate, isobolonyl (meth)acrylate, dicyclopentanyl (meth)acrylate, dicyclopentenyl (meth)acrylate, dimethylaminoethyl (meth)acrylate, and diethylaminoethyl (meth)acrylate; vinyls having a hydroxyl group, such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; vinyls having an epoxy group, such as glycidyl (meth)acrylate and methyl glycidyl (meth)acrylate; vinyls having an isocyanate group, such as vinyl isocyanate and isopropenyl isocyanate; aromatic vinyls, such as styrene, α-methylstyrene, vinyltoluene, and t-butylstyrene; amides, such as acrylamide, methacrylamide, N-methylolmethacrylamide, N-methylolacrylamide, diacetoneacrylamide, and maleic acid amide; vinyl esters, such as vinyl acetate and vinyl propionate; aminoalkyl (meth)acrylates, such as N, N-dimethylaminoethyl (meth)acrylate, N, N-diethylaminoethyl (meth)acrylate, N, N-dimethylaminopropyl (meth)acrylate, N, N-dipropylaminoethyl (meth)acrylate, N, N-dibutylaminoethyl (meth)acrylate, and N, N-dihydroxyethylaminoethyl (meth)acrylate; unsaturated sulfonic acids, such as styrene sulfonic acid, sodium styrene sulfonic acid, 2-acrylamide-2-methylpropane sulfonic acid; and unsaturated phosphoric acids, such as mono(2-methacryloyloxyethyl) acid phosphate and mono(2-acryloyloxyethyl) acid phosphate. The compounds having unsaturated vinyl groups may be used in combination.

In particular, anhydrides of ethylene-based unsaturated carboxylic acids are preferred, and maleic anhydride is more preferred.

The modified polypropylene resin (P2) can be synthesized by a known method. For example, the following are possible: the unmodified propylene polymer and the monomer having a carboxylic acid structure are reacted in an organic solvent in the presence of a polymerization initiator, and then the solvent is removed; a melt (obtained by heating and melting the unmodified propylene polymer) and the carboxylic acid having an unsaturated vinyl group are stirred and reacted in the presence of a polymerization initiator; or a mixture of the unmodified propylene polymer, the carboxylic acid having an unsaturated vinyl group, and a polymerization initiator is supplied to an extruder and reacted while being heated and kneaded, and then converted into a carboxylate by a method such as neutralization or saponification.

Examples of the polymerization initiator include various peroxide compounds such as benzoyl peroxide, dichlorobenzoyl peroxide, dicumyl peroxide, di-tert-butyl peroxide, 2,5-dimethyl-2,5-di(peroxybenzoate) hexin-3, and 1,4-bis(tert-butylperoxyisopropyl)benzene, and azo compounds such as azobisisobutyronitrile. These polymerization initiators may be used in combination.

Examples of the organic solvent include aromatic hydrocarbons such as xylene, toluene, and ethylbenzene; aliphatic hydrocarbons such as hexane, heptane, octane, decane, isooctane, and isodecane; alicyclic hydrocarbons such as cyclohexane, cyclohexene, methylcyclohexane, and ethylcyclohexane; ester solvents such as ethyl acetate, n-butyl acetate, cellosolve acetate, propylene glycol monomethyl ether acetate, propylene glycol monoethyl ether acetate, and 3-methoxybutyl acetate; and ketone solvents such as methyl ethyl ketone and methyl isobutyl ketone. In particular, an aromatic hydrocarbon, an aliphatic hydrocarbon, or an alicyclic hydrocarbon is preferred as the organic solvent, and an aliphatic hydrocarbon or an alicyclic hydrocarbon is more preferred. These organic solvents may be used in combination as a mixture.

From the viewpoint of treating the raw material of the modified polypropylene resin (P2) as an aqueous dispersion, the monomer having a carboxylic acid structure is preferably neutralized or saponified.

The neutralization or saponification may be performed by a known method using any one of the following: alkali or alkaline earth metals or other metals such as sodium, potassium, lithium, calcium, magnesium, and zinc; inorganic amines such as hydroxylamine and ammonium hydroxide; organic amines such as ammonia, (tri)methylamine, (tri)ethanolamine, (tri)ethylamine, dimethyl ethanolamine, and morpholine; oxides, hydroxides, or hydrides of alkali or alkaline earth metals and other metals such as zinc, for example, sodium oxide and sodium peroxide; and weak acid salts of alkali or alkaline earth metals or other metals such as sodium carbonate.

The degree of neutralization or saponification by the neutralization or saponification is preferably 50% or more and 100% or less, more preferably 70% or more and 100% or less, even more preferably 85% or more and 100% or less, from the viewpoint of increasing both the stability of the aqueous dispersion and the adhesiveness with reinforcing fibers. The carboxylic acid groups in the modified polypropylene resin (P2) are preferably all neutralized or saponified, but some of the carboxylic acid groups may remain without being neutralized or saponified.

The salt components of carboxylic acid groups can be identified and the amount thereof may be measured by, for example, the following methods: a method for detecting metal species forming a salt by ICP emission spectrometry, or a method for identifying the structure of an acid group salt by IR, NMR, mass spectrometry, or elemental analysis.

1-2-1-2. Polyamide resin

The polyamide resin can particularly improve the adhesion of a UD sheet to a metal. Any type of polyamide resin may be used, and any one of various types of known polyamide resin may be used. Examples of the polyamide resin include polyamide 6, polyamide 12, polyamide 66, polyamide 11, and aromatic polyamides. In particular, polyamide 6 and polyamide 12 are preferred.

The melt flow rate (MFR) of the polyamide resin measured at 230°C and a load of 2.16 kg according to ASTM D1238 after the polyamide resin is dried at 80°C for 5 hours is preferably 40 g/10 min or more, more preferably 40 g/10 min or more and 400 g/10 min or less. An MFR within this range is more likely to satisfactorily impregnate the reinforcing fibers with the matrix resin.

The weight average molecular weight (Mw) of the polyamide resin is preferably 5,000 or more and 50,000 or less, more preferably 5,000 or more and 30,000 or less.

1-2-2. Additional component

The matrix resin may contain one or more additional components from the following: resins other than those described above, short fibers having a length shorter than the above-described reinforcing fibers, weathering stabilizers, antioxidants, and pigments such as carbon black.

1-3. Method for producing UD sheet

The UD sheet can be prepared by impregnating the reinforcing fibers with the matrix resin.

The figure schematically illustrates a production apparatus 100 for a UD sheet.

Production apparatus 100 for a fiber reinforced resin includes bobbin 112 disposed in yarn feeder 110, guide path 120 for moving reinforcing fibers 200 fed out from the bobbin, fiber opener 130, impregnating body 140, cooling roller 150, and collecting roller 160.

Yarn feeder 110 supplies reinforcing fibers that are to be impregnated with a resin in impregnating body 140 to constitute a fiber reinforced resin. Yarn feeder 110, for example, may have the following configuration: a creel in which a plurality of spindles are disposed, and bobbin 112, around which reinforcing fiber 200 is wound, is rotatably installed at each spindle.

Guide path 120 guides reinforcing fibers 200 supplied from yarn feeder 110 to the components, namely fiber opener 130, impregnating body 140, cooling rollers 150, and collecting roller 160, in this order. Guide path 120 includes a plurality of guide roller 122 and feeder 124 formed from two rollers facing each other with reinforcing fibers 200 therebetween. The two rollers constituting feeder 124 rotate in opposite directions to each other to nip the reinforcing fibers, thereby moving reinforcing fibers 200 onto a movement path formed from guide rollers 122. In this manner, reinforcing fibers 200 arranged to be oriented in one direction are supplied to guide path 120 (step of arranging reinforcing fibers to orient the reinforcing fibers in one direction).

As reinforcing fibers 200 are continuously fed out from bobbins 112 and moved by feeder 124, reinforcing fibers 200 continuously move on guide path 120 without interruption.

At this time, feeder 124 applies a predetermined tension to reinforcing fibers 200. Due to the above tension, the reinforcing fibers are oriented linearly in the direction of movement. In this state, the reinforcing fibers are impregnated with a matrix resin at impregnating body 140, thereby producing a UD sheet including a plurality of reinforcing fibers 200 arranged to be oriented in one direction and the matrix resin spreading through reinforcing fibers 200.

Fiber opener 130 opens reinforcing fibers 200. Fiber opener 130 may have any configuration and may have the following configuration: reinforcing fibers 200 are opened by contact (rubbing) with a rotating roller or bar, or reinforcing fibers 200 are immersed with a sizing liquid stored in a sizing tank. In addition, at the same time, vibrations may be applied to the reinforcing fibers by using ultrasonic waves or the like (step of opening reinforcing fibers).

Impregnating body 140 impregnates the opened reinforcing fibers 200 with a resin (thermoplastic resin) (a step of impregnating reinforcing fibers with a resin).

In the present embodiment, impregnating body 140 is an impregnation roller that rotates. A molten resin 144 extruded from extruder 142 adheres to the rotating surface of impregnating body 140 and rotates. In addition, impregnating body 140 is heated by a heating section (not illustrated) to a temperature that allows impregnation of reinforcing fibers 200 with the molten resin 144.

Reinforcing fibers 200 moving along guide path 120 are pressed by guide roller 146 onto the rotating surface (to which resin 144 adheres) of impregnating body 140, namely an impregnation roller. In this state, reinforcing fibers 200 move along the surface of the impregnating roller while being in contact with the surface. Due to the above contact and movement, reinforcing fibers 200 are impregnated with the molten resin 144. In addition, tension meter 148 is disposed at guide path 120 immediately in front of impregnating body 140 to measure the tension of reinforcing fibers 200 at impregnating body 140. The type of tension meter 148 is not limited, and, for example, a V-shaped digital tension meter manufactured by Nidec-Shimpo Corporation can be used.

Cooling rollers 150 is formed from two rollers facing each other with reinforcing fibers 200 therebetween. The surface temperature of cooling rollers 150 is controlled by a cooling mechanism. Cooling rollers 150 solidify resin 144 spreading through reinforcing fibers 200 by cooling the resin in a sheet form placed between the pair of rollers while pressure (here, resin 144 maintains its sheet form) (step of applying pressure and cooling). The resin does not need to be completely solidified while in contact with cooling rollers 150. In the present step, the following is also possible: the resin is solidified to such an extent that the shape of the UD sheet does not change, and then the resin is completely solidified during the subsequent movement on guide path 120.

Any material may be used for the cooling rollers 150, and rubber or metal may be used.

Reinforcing fibers 200 with solidified resin 144 therein are then wound around collecting roller 160 and collected.

In the present embodiment, the above-described production apparatus 100 for a UD sheet is used and at least two of the following conditions (1) to (3) are satisfied, thereby producing a UD sheet.

> (1) The step of impregnating is performed while a tension of 800 cN or more and 2,000 cN or less is applied to reinforcing fibers 200 in the one direction.
> (2) The step of applying pressure and cooling is performed with the press pressure of the pressure applied by using cooling rollers 150 being 1.0 bar or more and 6.0 bar or less.
> (3) The step of applying pressure and cooling is performed by applying pressure by using cooling rollers 150 that have been subjected to mold release treatment.

By condition (1), the tension of reinforcing fibers is increased, thus, displacement of the reinforcing fibers is less likely to occur when the reinforcing fibers are impregnated with a resin. Specifically, increasing the tension of the reinforcing fibers can reduce the variation in the deviation of the orientation directions of the reinforcing fibers within the UD sheet. Herein, the variation would be caused by local misalignment of reinforcing fibers 200 due to contact with the molten resin during resin impregnation. The tension applied to reinforcing fibers 200 during impregnation may be the tension of reinforcing fibers 200 measured by tension meter 148 disposed immediately in front of impregnating body 140.

The tension to be applied to reinforcing fibers 200 during impregnation can be adjusted by feeder 124. Alternatively, the tension to be applied to reinforcing fibers 200 during impregnation may be adjusted, for example, by using a known tension adjuster provided in guide path 120. The tension applied to reinforcing fibers 200 during impregnation is preferably 800 cN or more and 2,000 cN or less, more preferably 1,000 cN or more and 2,000 cN or less, and even more preferably 1,500 cN or more and 2,000 cN or less.

By condition (2), displacement of the reinforcing fibers due to minute movements of the resin or reinforcing fibers when the resin is cooled to be solidified is less likely to occur. Specifically, it can be deduced that increasing the pressure during cooling to a certain extent can firmly press reinforcing fibers 200, thus local displacement of reinforcing fibers 200 can be prevented. Herein, the local displacement would be caused by flow of the resin and/or crystals during solidification. In addition, it can be deduced that adjusting the pressure during cooling to fall within a range that is not too high allows the resin and/or crystals to be less likely to flow during solidification, thereby preventing local displacement of reinforcing fibers 200.

The press pressure applied by using cooling rollers 150 can be adjusted by changing the distance between the two opposing rollers. The press pressure applied by using cooling rollers 150 during applying pressure and cooling is preferably 1.0 bar or more and 6.0 bar or less, and more preferably 1.5 bar or more and 5.0 bar or less.

By condition (3), displacement of the reinforcing fibers when the UD sheet is removed from cooling rollers 150 after the resin has been cooled is less likely to occur. Specifically, as cooling rollers 150 are subjected to mold release treatment to make it easier to remove the UD sheet from the cooling rollers, the variation in the deviation of the orientation directions of the reinforcing fibers within the UD sheet can be reduced. Herein, the variation would be caused by local misalignment of reinforcing fibers 200 due to the pressure applied to reinforcing fibers 200 during the removing.

The mold release treatment can be performed by applying a mold release agent to the surface of cooling rollers 150. The type of mold release agent is not limited, and any one of known mold release agents such as silane mold release agents, fluorine mold release agents, wax mold release agents, and mold release agents including surfactants may be used. The form of mold release agent is not limited either, and any known form such as an emulsion, oil, solution, baked, or sprayed form may be used. In the present embodiment, cooling rollers 150 whose surface has been subjected to mold release treatment in advance with at least one of these mold release agents may be used.

In the present embodiment, when at least two of the conditions (1) to (3) are satisfied, a UD sheet with satisfactorily increased tensile strength can be obtained. According to the findings of the present inventors, the largest influence on the variation in the deviation of the orientation directions of the reinforcing fibers within a UD sheet is from the local misalignment of reinforcing fibers 200 that occurs during impregnation. Therefore, it is preferable that at least condition (1) of conditions (1) to (3) is satisfied. Specifically, during the production of a UD sheet, it is preferable that at least condition (1) and condition (2), or at least condition (1) and condition (3) are satisfied, and it is more preferable that at least condition (1) and condition (3) are satisfied. For example, when it is difficult to perform mold release treatment on cooling roller 150, conditions (1) and (2) may be satisfied. From the view point of obtaining a UD sheet with further increased tensile strength by further reducing the variation in the deviation of the orientation direction of reinforcing fibers within the UD sheet, it is more preferable that all conditions (1) to (3) are satisfied during the production of a UD sheet.

3. Applications

A UD sheet can be used for any application, and the UD sheet may be molded and used as a structural material, or the UD sheet may be used as a reinforcing material for other structural materials. The UD sheet is particularly useful as a reinforcing material for components of vehicles and aircraft that require strength.

A UD sheet may be used as it is as a structural material or reinforcing material, or UD sheets may be laminated and used as a structural material or reinforcing material.

Specific examples of applications where UD sheets are used include the following: part members for general flying objects such as aircraft and helicopters, for example, primary structural materials such as main wings, vertical stabilizers, and horizontal stabilizers, secondary structural materials such as ailerons, rudders, and elevators, interior materials such as seats and tables, power units, hydraulic cylinders, and composite brakes; part members for rockets such as nozzle cones and motor cases; part members for artificial satellites such as antennas, structures, solar panels, battery cases, and telescopes; part members for machines such as frames, shafts, rollers, leaf springs, machine tool heads, robot arms, transport hands, synthetic fiber pots; part members for high-speed rotating bodies such as centrifuge rotors and uranium enrichment cylinders; electronic part members such as parabolic antennas, battery parts, radars, acoustic speaker cones, computer parts, printer parts, personal computer housings, and tablet housings; part members for automobiles and motorcycles such as frame parts, semi-structural parts, outer panel parts, interior/exterior parts, power units, other equipment-hydraulic cylinders, brakes, battery cases, drive shafts, engine parts, spoilers, racing car bodies, crash cones, chairs, tablets, telephone covers, undercovers, side covers, transmission covers, battery trays, rear steps, spare tire containers, bus body walls, and truck body walls; part members for train cars and vehicles such as interior materials, floor panels, ceiling panels, linear motor car bodies, Shinkansen (super express) and railway bodies, window wipers, bogies, and seats; hulls of ships such as yachts, cruisers and boats; part members for ships such as masts, rudders, propellers, hard sails, screws, military fuselages, submarine fuselages, and deep sea exploration ships; part members for pressure vessels such as actuators, cylinders, tanks, hydrogen tanks, CNG tanks, and oxygen tanks; part members for scientific equipment such as stirring blades, pipes, tanks, pit floors, and plant piping; part members for wind power generation such as blades, skins, skeletal structures, and deicing systems;. part members and supplies for medical and nursing equipment such as X-ray diagnostic equipment, wheelchairs, artificial bones, artificial legs and hands, crutches, nursing care aids and robots (power assist suits), walking machines, and nursing care beds; part members for infrastructure and civil engineering and construction such as CF composite cables, concrete reinforcements, guardrails, bridges, tunnel walls, hoods, cables, tension rods, strand rods, and flexible pipes; part members for submarine oil field mining such as marine risers, flexible jumpers, flexible risers, and drilling risers; sports and leisure goods such as fishing rods, reels, golf clubs, tennis rackets, badminton rackets, ski plates, stocks, snowboards, ice hockey sticks, snowmobiles, bows, kendo bamboo swords, baseball bats, swim plungers, sporting goods for the disabled, and sports helmet; bicycle parts such as frames, disc wheels, rims, handles, and saddles; livingware such as eyeglasses, bags, umbrellas, and ballpoint pens; and part members and supplies for other industrial applications such as plastic pallets, containers, logistics materials, resin molds, furniture, umbrellas, helmets, pipes, scaffolding boards, safety boots, protectors, fuel cell covers, drone blades, jigs, and jig frames.

Examples

Hereinafter, the present invention will be described in more detail with reference to Examples, but the scope of the present invention is not limited to the description of the Examples.

1. Methods for measuring various physical properties

1-1. Standard deviation of orientation angle

The standard deviations of the orientation angles of the reinforcing fibers in each fiber reinforced resin sheet was calculated by image analysis of the sheet data captured by X-ray CT. The imaging conditions for X-ray CT are as follows.

Device used: nano3DX manufactured by Rigaku Corporation
Target used: Cu

Lens used: 0540
Binning: 1
Number of scanning angles: 1000 points
Accumulated time at each angle: 12 seconds
FOV: 1.3 mm$_\varphi$ × 1.3mm
Pixel size: 0.650$\mu$m/voxel
Measurement data: 16 bits

For image analysis, a fiber composite material analysis module of VGSTUDIO MAX manufactured by Volume Graphics was used. The standard deviation of the orientation angles was obtained under the following conditions. A planar projection with the sheet thickness direction as the normal was used, and the inclination of the reinforcing fibers in the thickness direction was ignored because it was extremely small. The scale and integrated region radius are set to 1.75 $\mu$m, which is a quarter of the fiber diameter of 7 $\mu$m (catalog value), and sections where the gradient of gray value is 3,000 or more are detected for each scale, and the respective projection angles are calculated. This projection angle was used as the orientation angle of each reinforcing fiber. Furthermore, the standard deviation of the orientation angles in the FOV (effective field of view) was determined. Specifically, a virtual line (center line) connecting the centers of each sheet in the direction (width direction) orthogonal to the direction in which reinforcing fibers are oriented in each sheet is specified. The sample was measured in four sections at respective four positions (at 15 cm intervals and other than the ends) obtained by dividing the center line into 5 equal parts, and the standard deviation of the orientation angles was determined for each section. Next, the average value and coefficient of variation (%) of the standard deviations were calculated and used as the average value and coefficient of variation of the standard deviations of the orientation angles of each sheet.

1-2. Fiber volume fraction (Vf)

The fiber volume fractions (Vf) of each sheet was calculated by analyzing the data captured by the X-ray CT and determining the respective volumes of the reinforcing fiber portion and the matrix resin portion. VGSTUDIO MAX manufactured by Volume Graphics was used to obtain the fiber volume fraction (Vf). First, the region of a reinforcing fiber portion and the region of a matrix resin portion were separated by using a threshold value of 29,900, and the area of each region was obtained. These determined areas were used as the volume of the reinforcing fiber portion and the volume of the matrix resin portion. Then, from these values, the fiber volume fraction (Vf) in the data was determined. Specifically, a virtual line (center line) connecting the centers of each sheet in the direction (width direction) orthogonal to the direction in which reinforcing fibers are oriented in each sheet is specified. The sample was measured in four sections at respective four positions (at 15 cm intervals and other than the ends) obtained by dividing the center line into 5 equal parts, and the fiber volume fraction (Vf) was determined for each section. The average value and coefficient of variation (%) of the fiber volume fractions (Vf) were then calculated and used as the average value and coefficient of variation of the fiber volume fractions (Vf) of each sheet.

1-3. Porosity

The porosity of each sheet was calculated by analyzing the data captured by the X-ray CT. VGSTUDIO MAX manufactured by Volume Graphics was used for the calculation of the porosity. The region of a void portion and the region of a matrix resin portion were separated by using a threshold value of 13,000 (this matrix resin portion also includes a reinforcing fiber portion), and the area of each region was obtained. The proportion of the areas of the void portions in the data was used as the porosity in the data. Specifically, a virtual line (center line) connecting the centers of each sheet in the direction (width direction) orthogonal to the direction in which reinforcing fibers are oriented in each sheet is specified. The sample was measured in four sections at respective four positions (at 15 cm intervals and other than the ends) obtained by dividing the center line into 5 equal parts, and the porosity was determined for each section. The average value of the porosity was then calculated and used as the porosity of each sheet.

1-4. Sheet thickness

The thickness of each sheet was measured by using a length gauge CT6001 manufactured by Heidenhain.

1-5. Tensile strength

The tensile strength (MPa) of each fiber reinforced resin sheet was measured according to ASTM D3039/D3039-07.

1-6. Tensile strength development rate

Using the tensile strength (MPa) of carbon fiber (which is the raw material), the tensile strength (MPa) of the fiber reinforced resin sheet, the average value of Vf (%), the elastic modulus (MPa) of the matrix resin, and the breaking strain (%) of the carbon fiber, the tensile strength development rate was calculated from the equations below. The tensile strength (MPa) of the carbon fiber and the breaking strain (%) of the carbon fiber were measured according to JIS R7606 (2000). The elastic modulus (MPa) of the matrix resin was obtained by preparing a multipurpose test piece, a test piece shaped as a JIS K7139 (2009), by injection molding the matrix resin, and performing measurement by a tensile test in accordance with JIS K7161-2 (2014).

$$\text{Tensile strength (MPa) according to compound law} = \text{Tensile strength (MPa) of carbon fiber} \times \frac{\text{Average value of Vf (\%)}}{100}$$

$$+ \text{Elastic modulus (MPa) of matrix resin} \times \frac{\text{Breaking strain (\%) of carbon fiber}}{100} \times \frac{(100 - \text{Average value of Vf (\%)})}{100}$$

$$\text{Tensile strength development rate (\%)} = \frac{\text{Tensile strength (MPa) of fiber reinforced resin sheet}}{\text{Tensile strength (MPa) according to compound law}}$$

2. Preparation of Fiber Reinforced Resin Sheet

2-1. Washing of carbon fiber bundle

A carbon fiber bundle (product name, TAIRYFIL TC35R (number of filaments: 24,000, tensile strength: 4,000 MPa, tensile modulus: 242 GP) manufactured by Formosa Plastic Corporation) was immersed in acetone and subjected to ultrasonic waves for 10 minutes. After that, the carbon fiber bundle was pulled out and washed three times with acetone, and then dried at room temperature for 8 hours, thereby obtaining a carbon fiber bundle from which the adhering sizing agent is removed.

2-2. Production of emulsion

Mixed were 100 parts by mass of propylene/butene copolymer having a Shore D hardness of 52 and a weight average molecular weight Mw of 350,000 measured by GPC as propylene resin (A), 10 parts by mass of maleic anhydride-modified propylene polymer (weight average molecular weight Mw of 20,000, acid value of 45 mg-KOH/g, maleic anhydride content of 4 mass%, melting point of 140°C) as propylene resin (B), and 3 parts by mass of potassium oleate as a surfactant. The mixture was fed from the hopper of a twin-screw extruder (PCM-30, L/D: 40, manufactured by Ikegai Corp) at a rate of 3,000 g/hour, and 20% aqueous solution of potassium hydroxide was continuously fed at a rate of 90 g/hour from a feed port provided in the vent section of the extruder. The mixture was continuously extruded at a heating temperature of 210°C. The extruded resin mixture was cooled to 110°C with a static mixer with a jacket installed at the mouth of the extruder, and further fed into 80°C warm water to obtain an emulsion for carbon fiber pretreatment. The solid content concentration of the obtained emulsion was 45% (based on mass).

The above-described maleic anhydride-modified propylene resin is a modified resin obtained by mixing 96 parts by mass of propylene/butene copolymer, 4 parts by mass of maleic anhydride, and 0.4 parts by mass of polymerization initiator (product name, Perhexyne 25B, manufactured by NOF CORPORATION), and subjecting the mixture to the modification at a heating temperature of 160°C for 2 hours.

2-3. Production of carbon fiber bundle

By a roller impregnation method, the above obtained emulsion for carbon fiber pretreatment was allowed to adhere to the carbon fibers forming the carbon fiber bundle having washed by the method described above. The resultant was then dried online at 130°C for 2 minutes to remove the low boiling point components to obtain carbon fiber bundles. The adhesion amount of the emulsion was 0.87 mass%.

2-4. Preparation of fiber reinforced resin sheet

(Example 1: Fiber reinforced resin sheet 1)

The carbon fiber bundles obtained as described above were aligned, and a fiber reinforced resin sheet was produced by using the production apparatus illustrated in the figure.

Specifically, polypropylene (product name J108M, MFR (ASTM D 1238, 230°C, load: 2.16 kg) of 45 g/10 minutes, manufactured by Prime Polymer Co., Ltd.) and maleic anhydride-modified polypropylene resin (product name ADMER QE800, MFR (ASTM D 1238, 230°C, load: 2.16 kg) of 9.1 g/10 minutes, manufactured by Mitsui Chemicals, Inc.) were mixed at a mass ratio of 90/10, and then melt-mixed in an extruder equipped with a T-die. Then, the obtained resin was extruded from the T-die and supplied onto the circumferential surface of a rotating impregnation roller. The reinforcing fiber bundle of carbon fibers was continuously sent out from a conveyance roller, and was impregnated by joining with the extruded resin at the impregnation roller to obtain a unidirectional fiber reinforced thermoplastic resin sheet. The obtained sheet was allowed to pass through cooling rollers while applying pressure to the sheet, thereby cooling and solidifying the thermoplastic resin. The sheet was cut to have the dimensions of 75 cm in the carbon fiber orientation direction (length) and of 5 cm in the direction (width) orthogonal to the carbon fiber orientation direction.

In the above operations, the temperatures of the extruder, T-die, and impregnation roller are all adjusted to 260°C, and the amount of resin supplied is adjusted such that the mass ratio between the carbon fiber bundle and the resin (carbon fiber bundle/resin) is 67/33. The tension of the carbon fibers (CF tension) was adjusted so that the value measured immediately in front of the impregnation roller was 1,800 cN. A mold release agent (New Ceracote G TA-740, from Toyo Kagaku Shokai) was applied to the cooling rollers before production. In addition, regarding the cooling rollers, the press pressure was adjusted to 4.5 Bar and the temperature was adjusted to 30°C. The tensile strength of the fiber reinforced resin sheet 1 thus obtained was 1,662 MPa.

(Example 2: Fiber reinforced resin sheet 2)

A fiber reinforced resin sheet 2 was obtained in the same manner as in the preparation of the fiber reinforced resin sheet 1, except that the tension of the carbon fibers (CF tension) was changed to 1,200 cN. The tensile strength of the obtained fiber reinforced resin sheet 2 was 1,625 MPa.

(Example 3: Fiber reinforced resin sheet 3)

A fiber reinforced resin sheet 3 was obtained in the same manner as in the preparation of the fiber reinforced resin sheet 1, except that the tension of the carbon fibers (CF tension) was changed to 1,200 cN and the press pressure of the cooling rollers was changed to 2.5 Bar. The tensile strength of the obtained fiber reinforced resin sheet 3 was 1,651 MPa.

(Example 4: Fiber reinforced resin sheet 4)

A fiber reinforced resin sheet 4 was obtained in the same manner as in the preparation of the fiber reinforced resin sheet 1, except that the tension of the carbon fibers (CF tension) was changed to 1,200 cN and the press pressure of the cooling rollers was changed to 6.5 Bar. The tensile strength of the obtained fiber reinforced resin sheet 4 was 1,637 MPa.

(Example 5: Fiber reinforced resin sheet 5)

A fiber reinforced resin sheet 5 was obtained in the same manner as in the preparation of the fiber reinforced resin sheet 1 except that the tension of the carbon fibers (CF tension) was changed to 1,200 cN and no mold release agent was applied. The tensile strength of the obtained fiber reinforced resin sheet 5 was 1,608 MPa.

(Example 6: Fiber reinforced resin sheet 6)

A fiber reinforced resin sheet 6 was obtained in the same manner as in the preparation of the fiber reinforced resin sheet 1, except that the tension of the carbon fibers (CF tension) was changed to 600 cN. The tensile strength of the obtained fiber reinforced resin sheet 6 was 1,560 MPa.

(Comparative Example 1: Fiber reinforced resin sheet 7)

A fiber reinforced resin sheet 7 was obtained in the same manner as in the preparation of the fiber reinforced resin sheet 1 except that the tension of the carbon fibers (CF tension) was changed to 600 cN and no mold release agent was applied to the cooling rollers. The tensile strength of the obtained fiber reinforced resin sheet 7 was 1,468 MPa.

(Comparative Example 2: Fiber reinforced resin sheet 8)

A fiber reinforced resin sheet 8 was obtained in the same manner as in the preparation of the fiber reinforced resin sheet 1, except that the tension of the carbon fibers (CF tension) was changed to 600 cN and the press pressure of the cooling rollers was changed to 6.5 Bar. The tensile strength of the obtained fiber reinforced thermoplastic resin sheet 8 was 1,483 MPa.

(Comparative Example 3: Fiber reinforced resin sheet 9)

A fiber reinforced resin sheet 9 was obtained in the same manner as in the preparation of the fiber reinforced resin sheet 1, except that the tension of the carbon fibers (CF tension) was changed to 1,200 cN, no mold release agent was applied to the cooling rollers, and the press pressure of the cooling rollers was changed to 6.5 Bar. The tensile strength of the obtained fiber reinforced resin sheet 9 was 1,364 MPa.

3. Result

Table 1 shows the production conditions and physical properties of the fiber reinforced resin sheets 1 to 9 obtained above.

[Table 1]

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Production condition | CF tension(cN) | 1800 | 1200 | 1200 | 1200 | 1200 | 600 | 600 | 600 | 1200 |
| | Press pressure of cooling roll (bar) | 4.5 | 4.5 | 2.5 | 6.5 | 4.5 | 4.5 | 4.5 | 6.5 | 6.5 |
| | Mold release treatment on cooling roll | Yes | Yes | Yes | Yes | No | Yes | No | Yes | No |
| | Coefficient of variation of orientation angle standard deviation (%) | 2.3 | 5.1 | 7.1 | 6.6 | 9.7 | 14.9 | 19.2 | 20.1 | 28 |
| | Average value of orientation angle standard deviation (°) | 3.78 | 1.86 | 2.69 | 1.97 | 2.72 | 1.65 | 1.92 | 2.08 | 2.05 |
| Physical properties | Coefficient of variation of Vf (%) | 4.0 | 3.2 | 2.7 | 3.0 | 1.7 | 3.1 | 3.8 | 4.4 | 5.6 |
| | Average value of Vf (%) | 46.5 | 49.5 | 50.8 | 52.6 | 53.7 | 52.1 | 51.8 | 53.1 | 48.6 |
| | Average value of porosity (%) | 0.8 | 0.4 | 3.7 | 2.7 | 1.0 | 1.7 | 2.5 | 2.3 | 0.9 |
| | Sheet thickness (mm) | 0.15 | 0.16 | 0.16 | 0.15 | 0.16 | 0.16 | 0.16 | 0.15 | 0.15 |
| | Tensile strength (MPa) | 1662 | 1625 | 1651 | 1637 | 1608 | 1560 | 1468 | 1483 | 1364 |
| | Tensile strength development rate (%) | 88 | 78 | 80 | 77 | 74 | 74 | 70 | 69 | 69 |

As shown in Table 1, the fiber reinforced resin sheets, which were prepared to satisfy at least two of conditions (1) to (3) and have a coefficient of variation of the standard deviations of the orientation angles of 17.0% or less, have tensile strength of 1,500 MPa or more, thereby achieving very high tensile strength. As indicated by the tensile strength development rate, such tensile strength was closer to the theoretical value of tensile strength determined by calculation.

This application is entitled to and claims the benefit of Japanese Patent Application No. 2022-048572 filed on March 24, 2022, the disclosure of which including the specification, claims, and drawings is incorporated herein by reference in its entirety.

Industrial Applicability

Fiber reinforced resin sheets (UD sheets) of the present invention have increased tensile strength, therefore, the UD sheets can be suitably used as various reinforcing materials.

Reference Signs List

    100 Production apparatus for fiber reinforced resin
    110 Yarn feeder
    112 Bobbin
    120 Guide path
    122 Guide roller
    124 Feeder
    130 Fiber opener
    140 Impregnating body
    142 Extruder
    144 Molten resin
    146 Guide roller
    148 Tension meter
    150 Cooling roller
    160 Collecting roller
    200 Reinforcing fiber

**Claims**

1. A fiber reinforced resin sheet, comprising:

   a plurality of reinforcing fibers arranged to be oriented in one direction; and
   a thermoplastic resin spreading through the plurality of reinforcing fibers, wherein
   a coefficient of variation of standard deviations of orientation angles of the plurality of reinforcing fibers is 17.0% or less.

2. The fiber reinforced resin sheet according to claim 1, wherein
   the plurality of reinforcing fibers have an average value of the standard deviations of the orientation angles of 5.0° or less.

3. The fiber reinforced resin sheet according to claim 1 or 2, wherein
   the fiber reinforced resin sheet has a coefficient of variation of fiber volume fractions (Vf) of 5.0% or less.

4. The fiber reinforced resin sheet according to any one of claims 1 to 3, wherein
   the fiber reinforced resin sheet has an average value of fiber volume fractions (Vf) of 30% or more and 70% or less.

5. The fiber reinforced resin sheet according to any one of claims 1 to 4, wherein
   the fiber reinforced resin sheet has a thickness of 0.05 mm or more and 3.00 mm or less.

6. The fiber reinforced resin sheet according to any one of claims 1 to 5, wherein
   the thermoplastic resin is a polyolefin.

7. A method for producing a fiber reinforced resin sheet, the method comprising:

arranging a plurality of reinforcing fibers to orient the plurality of reinforcing fibers in one direction;
impregnating the plurality of arranged reinforcing fibers with a thermoplastic resin; and
by using a cooling roller, cooling the thermoplastic resin spreading through the plurality of reinforcing fibers while pressure is applied,
wherein
at least two of conditions (1) to (3) below are satisfied

(1) the impregnating is performed while a tension of 800 cN or more and 2,000 cN or less is applied to the plurality of reinforcing fibers in the one direction,
(2) the cooling while the pressure is applied is performed with press pressure of the pressure applied by using the cooling roller being 1.0 bar or more and 6.0 bar or less, and
(3) the cooling while the pressure is applied is performed by applying the pressure by using the cooling roller having been subjected to mold release treatment.

8. The method according to claim 7, wherein
all of the conditions (1) to (3) are satisfied.

Figure

# INTERNATIONAL SEARCH REPORT

International application No.

**PCT/JP2023/011424**

## A. CLASSIFICATION OF SUBJECT MATTER

*B29C 70/50*(2006.01)i; *B29B 11/16*(2006.01)i; *B29C 70/20*(2006.01)i
FI: B29C70/50; B29B11/16; B29C70/20

According to International Patent Classification (IPC) or to both national classification and IPC

## B. FIELDS SEARCHED

Minimum documentation searched (classification system followed by classification symbols)

B29C70/50; B29B11/16; B29C70/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | WO 2019/017057 A1 (TORAY INDUSTRIES, INC.) 24 January 2019 (2019-01-24) claims, paragraph [0045], examples | 1-6 |
| A | | 7-8 |
| A | JP 2015-016665 A (NIPPON STEEL SUMIKIN MATERIALS CO LTD) 29 January 2015 (2015-01-29) entire text | 1-8 |
| A | WO 2017/180784 A1 (TRILLIUM MARKETING INC.) 19 October 2017 (2017-10-19) entire text | 1-8 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 May 2023 | 06 June 2023 |

| Name and mailing address of the ISA/JP | Authorized officer |
|---|---|
| Japan Patent Office (ISA/JP) 3-4-3 Kasumigaseki, Chiyoda-ku, Tokyo 100-8915 Japan | |
| | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| WO | 2019/017057 | A1 | 24 January 2019 | US | 2020/0131325 | A1 | |
| | | | | claims, paragraph [0057], examples | | | |
| | | | | EP | 3656807 | A1 | |
| | | | | CN | 110892008 | A | |
| | | | | KR | 10-2020-0031604 | A | |
| JP | 2015-016665 | A | 29 January 2015 | US | 2016/0151984 | A1 | |
| | | | | entire text | | | |
| | | | | EP | 3020541 | A1 | |
| | | | | CN | 105377535 | A | |
| WO | 2017/180784 | A1 | 19 October 2017 | US | 2019/0127539 | A1 | |
| | | | | entire text | | | |

**INTERNATIONAL SEARCH REPORT**
Information on patent family members

International application No.

**PCT/JP2023/011424**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019017057 A
- WO 2017183672 A
- JP 2022048572 A